# EUROPÄISCHE PATENTSCHRIFT

(11) **EP 3 980 245 B1**
(45) Veröffentlichungstag und Bekanntmachung des Hinweises auf die Patenterteilung: **26.04.2023**
(21) Anmeldenummer: 20733903.7
(22) Anmeldetag: 04.06.2020
(51) Int. Cl.: B29C 64/165, B22F 5/00, B22F 3/00, B33Y 50/02, B33Y 40/00, B33Y 30/00, B33Y 10/00, B29C 64/393, B29C 64/295, B29C 64/245, B29C 64/194, B22F 10/14, B22F 12/17, B22F 12/90

(54) **VERFAHREN ZUM HERSTELLEN MINDESTENS EINES BAUTEILS IM 3D-DRUCK UND 3D-DRUCKER**
METHOD FOR PRODUCING AT LEAST ONE COMPONENT IN 3D PRINTING AND 3D PRINTER
PROCÉDÉ DE FABRICATION D'AU MOINS UN COMPOSANT PAR IMPRESSION 3D ET IMPRIMANTE 3D

(30) Priorität: 07.06.2019 EP 19179085
(43) Veröffentlichungstag der Anmeldung: 13.04.2022
(73) Patentinhaber: ExOne GmbH, 86368 Gersthofen (DE)
(72) Erfinder: MÜLLER, Andreas, 86152 Augsburg (DE); LADEWIG, Roland, 24340 Windeby (DE)
(74) Vertreter: Viering, Jentschura & Partner mbB Patent- und Rechtsanwälte
(86) Internationale Anmeldenummer: PCT/EP2020/065536
(87) Internationale Veröffentlichungsnummer: WO 2020/245301

(56) Entgegenhaltungen:
- WO-A1-2017/196328
- DE-A1-102011 053 205
- DE-A1-102015 006 363
- DE-A1-102017 006 860

## Beschreibung

Die vorliegende Erfindung betrifft ein Verfahren zum Herstellen mindestens eines Bauteils im 3D-Druck und einen 3D-Drucker.

Es sind verschiedene generative Fertigungsverfahren bzw. 3D-Druck-Verfahren (und folglich verschiedene Arten von 3D-Druckern, also Maschinen/Anlagen zum schichtweisen Aufbau eines Bauteils) bekannt.

Einige generative Fertigungsverfahren haben die folgenden Schritte gemeinsam:
(1) Es wird zunächst Partikelmaterial (bzw. partikelförmiges Baumaterial) vollflächig/durchgängig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich (entsprechend dem zu fertigenden Bauteil) selektiv verfestigt, zum Beispiel durch selektives Aufdrucken von (zum Beispiel flüssigem) Behandlungsmittel, zum Beispiel Bindemittel, zum Beispiel Binder.
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht aufgetragen wird (alternativ können zum Beispiel ein/der Beschichter und eine/die Druckvorrichtung jeweils um eine Schichtdicke angehoben werden).
(4) Schließlich kann das gefertigte Bauteil, das aus den verfestigten Teilbereichen gebildet ist und von losem, nicht-verfestigtem Partikelmaterial gestützt und umgeben ist, entpackt werden.

Ein/der Bauraum, in dem das oder die Bauteile gefertigt werden, kann zum Beispiel von einer sogenannten Baubox (auch "Jobbox" genannt, zum Beispiel ausgebildet als sog. "Wechselbehälter") definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden.

Ein schichtweises Aufbauen von ein oder mehreren dreidimensionalen Bauteilen in einem/dem Bauraum kann zum Beispiel durch selektives Verfestigen von mehreren aneinander angrenzenden Baumaterial-Schichten in einem jeweiligen Teilbereich davon erfolgen, zum Beispiel durch Binder-Jetting, d.h. durch (selektives) "Verkleben" des (partikelförmigen) Baumaterials mit einem (zum Beispiel flüssigen) Behandlungsmittel, zum Beispiel Bindemittel, zum Beispiel Binder.

In dem obigen Schritt (1) kommt in der Regel ein Beschichter (auch "Recoater" genannt) zum Einsatz. Es sind unterschiedliche Beschichter zur Verwendung in einem 3D-Drucker bekannt, mit denen ein partikelförmiges Baumaterial in Form einer gleichmäßigen, vollflächigen/durchgängigen Schicht auf das Baufeld (auch Baufläche oder Baubereich genannt) aufgebracht werden kann.

Eine Art von Beschichter verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden.

Eine andere Art von Beschichter (sog. "Behälter-Beschichter", zum Beispiel "Schlitz-Beschichter") verwendet einen Behälter, der einen inneren Hohlraum zur Aufnahme von partikelförmigem Baumaterial definiert, und hat einen (zum Beispiel langgestreckten) Ausgabebereich, zum Beispiel aufweisend einen (zum Beispiel langestreckten) Ausgabeschlitz, zum Ausgeben des partikelförmigen Baumaterials. Der Behälter-Beschichter kann zum Beispiel über ein/das Baufeld hinweg verfahrbar sein (zum Beispiel horizontal, zum Beispiel quer zu seiner Längsrichtung), wobei das partikelförmige Baumaterial durch den (langgestreckten) Ausgabebereich auf das Baufeld ausgebbar ist, um dadurch eine gleichmäßige, vollflächige/durchgängige Baumaterial-Schicht auf das Baufeld bzw. die Bauplattform aufzubringen. Der Beschichter kann zum Beispiel langgestreckt sein, um die Länge oder Breite eines rechteckigen Baufelds zu überspannen bzw. abzudecken.

In dem obigen Schritt (2) kann zum Beispiel eine Druckvorrichtung mit einem Druckkopf zum Einsatz kommen, der auf einen Teilbereich einer/der zuvor aufgebrachten Baumaterial-Schicht gesteuert ein (zum Beispiel flüssiges) Behandlungsmittel aufbringt (sog. "Binder-Jetting"). Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel, zum Beispiel Binder, sein/enthalten, zum Beispiel eine Bindemittel-Komponente eines Mehrkomponenten-Bindemittels.

WO 2017/196328 A1 offenbart ein 3D-Druck-Verfahren, bei dem eine Temperatur eines Baumaterials innerhalb von 100°C unter einem Schmelzpunkt des Baumaterials gehalten wird, ein Mittel zur Verringerung des Schmelzpunktes des Baumaterials auf zumindest einen Teil des Baumaterials aufgebracht wird, und der Teil des Baumaterials, der in Kontakt mit dem Mittel zur Verringerung des Schmelzpunktes des Baumaterials ist, bei der Temperatur schmilzt bzw. verschmilzt.

DE 10 2015 006 363 A1 offenbart ein 3D-Druck-Verfahren, bei dem Baumaterial auf einen Baubereich in einem Bauraum aufgetragen wird, selektiv ein Binder aufgebracht wird, und eine Temperatur in dem Bauraum auf mindestens 70°C einstellt wird und für mindestens 2 Stunden beibehalten wird, wobei die Bereiche, auf die selektiv Binder aufgebracht wurde, verfestigen.

Es kann als eine Aufgabe der vorliegenden Erfindung angesehen werden, ein Verfahren zum Herstellen mindestens eines Bauteils im 3D-Druck und einen 3D-Drucker anzugeben, mit denen ein Bauteil im 3D-Druck mittels Binder-Jettings effizient herstellbar ist.

Alternativ oder zusätzlich kann es als eine Aufgabe der vorliegenden Erfindung angesehen werden, ein Verfahren zum Herstellen mindestens eines Bauteils im 3D-Druck und einen 3D-Drucker anzugeben, mit denen ein Bauteil im 3D-Druck mittels Binder-Jettings zuverlässig herstellbar ist.

Hierzu stellt die vorliegende Erfindung ein Verfahren zum Herstellen mindestens eines Bauteils im 3D-Druck gemäß Anspruch 1 und einen 3D-Drucker gemäß Anspruch 13 bereit. Weitere erfindungsgemäße Ausgestaltungen sind Gegenstand der abhängigen Ansprüche.

Gemäß einem Aspekt der Erfindung kann ein Verfahren zum Herstellen mindestens eines Bauteils (zum Beispiel ein Gießkern und/oder eine Gießform) im 3D-Druck auf einer Bauplattform, die mit einer (zum Beispiel elektrischen) Heizvorrichtung versehen ist (und zum Beispiel in einer Baubox aufgenommen sein kann), die folgenden Schritte aufweisen:
Aufbringen einer Schicht aus losem Partikelmaterial (zum Beispiel Sandpartikel und/oder Salzpartikel, zum Beispiel solche für die Gießereitechnik) auf die Bauplattform, zum Beispiel mittels eines Beschichters, der zum Beispiel wie eingangs beschrieben ausgebildet sein kann,
Erwärmen der (zuletzt) aufgebrachten Schicht aus losem Partikelmaterial mittels der Heizvorrichtung der Bauplattform,
Ausgeben eines flüssigen Behandlungsmittels auf einen Teilbereich der zuletzt aufgebrachten / erwärmten Schicht aus losem Partikelmaterial (zum Beispiel mittels einer Druckvorrichtung mit einem Druckkopf, zum Beispiel durch sog. Binder-Jetting),
Wiederholen der obigen Schritte, um das mindestens eine Bauteil (schichtweise) aufzubauen (zumindest teilweise),
wobei das Erwärmen mittels der Heizvorrichtung der Bauplattform derart durchgeführt wird, dass
   eine Temperatur der Bauplattform während des Aufbauens des Bauteils in Richtung einer vorgegebenen Bauplattform-Höchsttemperatur ansteigt (insbesondere im Rahmen und/oder als Folge des Wiederholens der obigen Schritte), um eine Oberflächentemperatur der jeweils zuletzt aufgebrachten Schicht einzustellen.

Gemäß diesem Aspekt der Erfindung wird also während des Aufbauens des Bauteils Wärme in den auf der Bauplattform angeordneten Schichtenverbund eingetragen, und zwar von unten, ausgehend von der Bauplattform bzw. der Heizvorrichtung derselben, wobei eine Temperatur der Bauplattform während des Aufbauens des Bauteils in Richtung einer vorgegebenen Bauplattform-Höchsttemperatur ansteigt, um eine Oberflächentemperatur der jeweils zuletzt aufgebrachten Schicht einzustellen. Hierdurch kann (bereits) während des Aufbauens des Bauteils ein großer Betrag an Wärme in den Schichtenverbund eingebracht werden, was wiederum zu einer (Vor)Aushärtung des Bauteils bzw. des Behandlungsmittels/Binders beiträgt, und zwar ohne das Bauteil und/oder Komponenten des 3D-Druckers zu schädigen. Es mag zwar bekannt sein, das Baufeld von oben zu heizen, zum Beispiel unter Verwendung eines Infrarotstrahlers, hierdurch kann im Wesentlichen aber nur Wärme in die oberste Schicht eingebracht werden, was wiederum zu einer Aushärtung des gesamten Schichtenverbunds bzw. der darunterliegenden Schichten nur begrenzt beitragen kann. Zudem wurde gefunden, dass mit zunehmender Dicke des Schichtenverbunds die Temperatur der Bauplattform erhöht werden kann, um eine über die Zeit gesehen große Menge an Wärme in den Schichtenverbund einzubringen, wobei auf Grund der zunehmenden Dicke des Schichtenverbunds aus Partikelmaterial die Temperatur an der Oberfläche dennoch in einem eingestellten Bereich gehalten werden kann, der zum Beispiel für einen Druckkopf und/oder im Hinblick auf ein verwendetes Bindersystem unschädlich ist (zum Beispiel ein Bereich, in dem ein Verdampfen von Lösungsmittel des Behandlungsmittels für den Druckkopf unkritisch ist) und/oder der ein definiertes Reaktionsumfeld und/oder eine definierte Behandlungsmittel-Auftragsumgebung schafft, welche wiederum zu einer zuverlässigen Herstellung des Bauteils mit guten Haftkräften zwischen den Schichten beitragen können. Durch geeignete Wahl der Bauplattform-Höchsttemperatur kann zudem eine Schädigung des Bauteils in einem Bereich unmittelbar auf/über der Bauplattform vermieden werden. Es mag insofern ferner bekannt sein, durch eine poröse, beheizbare Bauplattform hindurch ein Wärmefluid in den Schichtenverbund einzubringen, dies erfolgt jedoch mit über den Bauprozess hinweg gesehen konstanter Wärmefluid-Temperatur, d.h. eine Temperatur der Bauplattform steigt nicht in Richtung einer vorgegebenen Bauplattform-Höchsttemperatur an, sondern ist konstant, und zudem kann hierdurch unter Umständen eine ggf. nicht erwünschte Fluidisierung des Partikelmaterials auftreten. Es ist also mit dem Verfahren gemäß diesem Aspekt der Erfindung möglich, ein Aushärten von im Binder-Jetting 3D-gedruckten Bauteilen bereits während des Druckvorgangs mittels der Heizvorrichtung der Bauplattform zu ermöglichen und somit ein Aushärten insgesamt zu beschleunigen, um das Bauteil letztendlich effizient herzustellen. Der Anstieg der Temperatur der Bauplattform während des Aufbauens des Bauteils in Richtung einer vorgegebenen Bauplattform-Höchsttemperatur wiederum ermöglicht ein zuverlässiges Herstellen des Bauteils, ohne eine Schädigung des Bauteils (insbesondere durch geeignete Auswahl des Höchstwertes) und/oder von Komponenten des 3D-Druckers (insbesondere durch geeignete Auswahl des Verlaufs des Temperaturanstiegs der Bauplattform bzw. durch geeignete Auswahl der Einstellung der Temperatur an der Baufeldoberfläche) zu riskieren. Die obigen Schritte können sich dabei zum Beispiel zeitlich überlappen. Die genannten drei Schritte werden dabei zum Beispiel für jede von einer Vielzahl von das Bauteil bildenden Schichten durchgeführt (zum Beispiel für alle das Bauteil bildenden Schichten oder eine überwiegende Anzahl (mehr als die Hälfte) der das Bauteil bildenden Schichten oder für eine wesentliche Anzahl (z.B. 25% oder mehr, z.B. 30% oder mehr, z.B. 35% oder mehr, z.B. 40% oder mehr, z.B. 45% oder mehr) der das Bauteil bildenden Schichten). Zum Beispiel können die genannten drei Schritte für eine Anzahl von mindestens 250 (zum Beispiel) aufeinanderfolgenden Schichten wiederholt werden. Der Anstieg der Temperatur der Bauplattform während des Aufbauens des Bauteils in Richtung der vorgegebenen Bauplattform-Höchsttemperatur kann zum Beispiel allmählich erfolgen, zum Beispiel stetig/kontinuierlich, zum Beispiel stufenförmig oder linear oder gemäß einer anderen Funktion. Die Temperatur der Bauplattform kann während des Aufbauens des Bauteils zum Beispiel ausgehend von einer Temperatur kleiner gleich 70°C in Richtung der vorgegebenen Bauplattform-Höchsttemperatur ansteigen (insbesondere im Rahmen und/oder als Folge des Wiederholens der obigen Schritte), d.h. beim Erwärmen einer ersten oder im Verfahren früh aufgebrachten Schicht beträgt die Bauplattformtemperatur kleiner gleich 70°C, zum Beispiel kleiner gleich 65°C, zum Beispiel kleiner gleich 60°C, zum Beispiel kleiner gleich 55°C. Zum Beispiel kann eine Temperatur der Bauplattform während des Aufbauens des Bauteils, d.h. zwischen einem Zeitpunkt des Auflegens/Aufbringens der ersten Bauteil-Schicht und der letzten Bauteil-Schicht, einen Anstieg / eine Temperaturdifferenz von größer gleich 100°C durchlaufen, zum Beispiel größer gleich 125°C, zum Beispiel größer gleich 150°C, zum Beispiel größer gleich 175°C. Der (allmähliche) Anstieg der Bauplattformtemperatur bis auf die Höchsttemperatur kann sich zum Beispiel über das Auftragen von mehr als 100 Schichten hinweg erstrecken, zum Beispiel mehr als 150, zum Beispiel mehr als 200.

Zum Beispiel kann bei dem Verfahren das flüssige Behandlungsmittel (mittelbar oder unmittelbar) zu einem (selektiven) Verkleben des (losen) Partikelmaterials (bzw. der Partikel des (losen) Partikelmaterials) beitragen und/oder dazu führen. Zum Beispiel kann das flüssige Behandlungsmittel ein Mittel zum (selektiven) Verkleben des (losen) Partikelmaterials (bzw. der Partikel des (losen) Partikelmaterials) aufweisen. Zum Beispiel kann das flüssige Behandlungsmittel ausgegeben werden, um das (lose) Partikelmaterial (bzw. die Partikel des (losen) Partikelmaterials) (selektiv) (miteinander) zu verkleben. Zum Beispiel kann das flüssige Behandlungsmittel ausgegeben werden zum (selektiven) Verkleben des (losen) Partikelmaterials (bzw. der Partikel des (losen) Partikelmaterials).

Zum Beispiel kann bei dem Verfahren das flüssige Behandlungsmittel ein flüssiges Bindemittel (zum Beispiel ein flüssiger Binder) und/oder eine flüssige Komponente eines Mehrkomponenten-Bindemittels (zum Beispiel eine flüssige Komponente eines Mehrkomponenten-Binders) aufweisen. Das flüssige Bindemittel bzw. die flüssige Komponente des Mehrkomponenten-Bindemittels können zum Beispiel (mittelbar oder unmittelbar) zu einem (selektiven) Verkleben des (losen) Partikelmaterials (bzw. der Partikel des (losen) Partikelmaterials) beitragen und/oder dazu führen.

Zum Beispiel kann bei dem Verfahren das flüssige Behandlungsmittel ein organisches Bindemittel oder eine Komponente eines organischen Bindemittels oder ein anorganisches Bindemittel oder eine Komponente eines anorganischen Bindemittels aufweisen. Das organische Bindemittel kann zum Beispiel ein Phenol-basiertes Bindemittel (zum Beispiel ein Phenolharz) und/oder ein Furan-basiertes Bindemittel (zum Beispiel ein Furanharz) aufweisen. Das anorganische Bindemittel kann zum Beispiel ein Wasserglas-basiertes Bindemittel (zum Beispiel ein Wasserglas) aufweisen.

Beim (selektiven) Verkleben kann das (lose) Partikelmaterial (bzw. die Partikel des (losen) Partikelmaterials) zum Beispiel verbunden werden, so dass das Partikelmaterial (bzw. die Partikel des Partikelmaterials) seine Form und/oder Gestalt (bei)behält (bzw. nicht verändert). D.h., beim (selektiven) Verkleben des (losen) Partikelmaterials (bzw. der Partikel des (losen) Partikelmaterials) findet zum Beispiel kein Schmelzen (bzw. Verschmelzen) und/oder Sintern (bzw. Versintern) und/oder (thermisches) Aufweichen und/oder Verformen des Partikelmaterials (bzw. der Partikel des Partikelmaterials) statt. Beim (selektiven) Verkleben kann zum Beispiel das (ausgegebene) Behandlungsmittel (zum Beispiel das Bindemittel, zum Beispiel der Binder) in fester (bzw. verfestigter) Form (zum Beispiel in ausgehärteter Form) zwischen den Partikeln des Partikelmaterials angeordnet sein, um die Partikel zu verbinden (bzw. zusammenzuhalten). D.h., beim (selektiven) Verkleben kann das Partikelmaterial (bzw. die Partikel des Partikelmaterials) zum Beispiel durch festes (bzw. verfestigtes) (zum Beispiel ausgehärtetes) Behandlungsmittel (zum Beispiel Bindemittel, zum Beispiel Binder) (selektiv) miteinander verbunden sein.

Das Erwärmen mittels der Heizvorrichtung der Bauplattform kann zum Beispiel derart durchgeführt werden, dass die Bauplattform bis zu dem Erreichen der vorgegebenen Bauplattform-Höchsttemperatur erwärmt wird, insbesondere wenn das zu fertigende Bauteil eine hierfür ausreichende/entsprechende Bauteildicke aufweist.

Nach dem Erreichen der vorgegebenen Bauplattform-Höchsttemperatur kann die Temperatur der Bauplattform zum Beispiel auf der vorgegebenen Bauplattform-Höchsttemperatur gehalten werden. Dies kann zu einem gewissen Abfall der Temperatur an der Baufeldoberfläche für die verbleibenden, aufzutragenden Schichten führen (verglichen mit einer Temperatur der Baufeldoberfläche für die Schichten vor Erreichen der Bauplattform-Höchsttemperatur bzw. während des Anstiegs der Bauplattformtemperatur; für besonders dicke Bauteile kann die Baufeldoberflächentemperatur für später aufgebrachte Bauteil-Schichten aufgrund des dazwischen angeordneten Schichtenverbunds dabei im Wesentlichen bis auf Umgebungstemperatur abfallen), was sich in der Praxis jedoch als hinnehmbar erwiesen hat im Hinblick auf eine zweckmäßige Behandlungsmittel-Auftragsumgebung (zudem könnte bei Bedarf auch zusätzlich von oben geheizt werden, zum Beispiel mittels eines Infrarotstrahlers). Hierdurch kann ein Aushärten des Bauteils weiter begünstigt werden.

Die vorgegebene Bauplattform-Höchsttemperatur kann zum Beispiel in einem Bereich von 180-320°C, zum Beispiel 200-300°C, zum Beispiel 220-280°C, zum Beispiel 240-260°C, liegen und/oder in Abhängigkeit von dem Behandlungsmittel und/oder dem Partikelmaterial gewählt sein/werden. Zum Beispiel kann vorgesehen sein, dass ein Benutzer dem 3D-Drucker über eine entsprechende Benutzerschnittstelle eine entsprechende Bauplattform-Höchsttemperatur vorgeben kann, zum Beispiel durch Eingabe oder Auswahl der Temperatur oder durch Eingabe oder Auswahl eines Behandlungsmittels oder einer Materialpaarung etc. Die vorgegebene Bauplattform-Höchsttemperatur kann zum Beispiel auch voreingestellt sein. Die vorgegebene Bauplattform-Höchsttemperatur kann zum Beispiel ein konstanter Wert sein, und zum Beispiel 250°C betragen.

Die Oberflächentemperatur der jeweils zuletzt aufgebrachten Schicht kann (infolge des Heizens des Schichtenverbunds mittels der Heizvorrichtung) zum Beispiel auf eine Temperatur kleiner oder gleich 70°C (zum Beispiel kleiner oder gleich 65°C, zum Beispiel kleiner oder gleich 60°C, zum Beispiel kleiner oder gleich 55°C) eingestellt werden, zum Beispiel während (der Durchführung) des gesamten Verfahrens und/oder während des gesamten Aufbauens des Bauteils, d.h. zum Beispiel bis zum Erreichen der vorgegebenen Bauplattform-Höchsttemperatur durch die Bauplattform-Temperatur und auch danach (während einem Halten der Bauplattform-Temperatur auf der Höchsttemperatur). Die Oberflächentemperatur der jeweils zuletzt aufgebrachten Schicht kann (infolge des Heizens des Schichtenverbunds mittels der Heizvorrichtung) zum Beispiel auf eine Temperatur in einem Bereich von 30-70°C, zum Beispiel 35-65°C, zum Beispiel 40-60°C, zum Beispiel 45-55°C, eingestellt werden, (zumindest) solange die vorgegebene Bauplattform-Höchsttemperatur nicht erreicht ist / bis zum Erreichen der vorgegebenen Bauplattform-Höchsttemperatur. Anschließend, d.h. nach Erreichen der Bauplattform-Höchsttemperatur, kann es wie oben beschrieben zu einem Abfall der Oberflächentemperatur kommen (trotz weiteres Heizens mittels der Heizvorrichtung bei vorgegebener Bauplattform-Höchsttemperatur), infolge des Aufbringens von frischen Schichten und aufgrund der zunehmenden Dicke des Schichtenverbunds, und letztendlich auch zu einem Verlassen des besagten Bereichs. Zum Beispiel kann die Oberflächentemperatur der jeweils zuletzt aufgebrachten Schicht auf eine im Wesentlichen konstante Temperatur eingestellt werden, solange die vorgegebene Bauplattform-Höchsttemperatur nicht erreicht ist. Die Oberflächentemperatur kann zum Beispiel eine in Abhängigkeit von dem Behandlungsmittel gewählte Temperatur sein.

Gemäß einer Ausführungsform kann hierzu zum Beispiel im Vorfeld, zum Beispiel experimentell, ein geeigneter Verlauf der Bauplattform-Temperatur bzw. von deren Anstieg ermittelt werden, um obige Einstellung der Oberflächentemperatur in dem Bereich zu erzielen. Die Bauplattform-Temperatur kann dann zur Herstellung des Bauteils gemäß dem/auf den ermittelten Verlauf gesteuert werden.

Gemäß einer anderen Ausführungsform kann das Einstellen der Oberflächentemperatur der jeweils zuletzt aufgebrachten Schicht zum Beispiel mittels einer Temperaturregelung (durch die Heizvorrichtung) unter Anwendung einer Sollwertvorgabe für die Oberflächentemperatur erfolgen, solange die vorgegebene Bauplattform-Höchsttemperatur nicht erreicht ist. Zum Beispiel kann vorgesehen sein, dass ein Benutzer dem 3D-Drucker (vor dem Start des Baujobs) über eine entsprechende Benutzerschnittstelle einen entsprechenden Oberflächentemperatur-Sollwert vorgeben kann, zum Beispiel durch Eingabe oder Auswahl der Temperatur oder durch Eingabe oder Auswahl eines Behandlungsmittels (für das eine entsprechende Sollwerttemperatur hinterlegt ist). Der vorgegebene Oberflächentemperatur-Sollwert kann zum Beispiel auch voreingestellt sein. Es kann also zum Beispiel - solange die vorgegebene Bauplattform-Höchsttemperatur nicht erreicht ist - die Oberflächentemperatur (=Baufeldtemperatur) auf eine vorgegebene Sollwerttemperatur geregelt werden, unter Verwendung der Heizvorrichtung der Bauplattform, wobei die Temperatur der Bauplattform während des Aufbauens des Bauteils infolge/für den Zweck besagter Temperaturregelung in Richtung der vorgegebenen Bauplattform-Höchsttemperatur ansteigt. Hierzu kann zum Beispiel für jede aufgebrachte Bauteil-Schicht (oder zum Beispiel für jede zweite oder dritte aufgebrachte Bauteil-Schicht) ein oder mehrmals ein Abgleich der Oberflächentemperatur mit dem Sollwert und im Anschluss ein zu dem Abgleich korrespondierendes Einstellen der Heizleistung erfolgen. Nach Erreichen der Bauplattform-Höchsttemperatur kann die Temperaturregelung dann zum Beispiel eingestellt werden und die Bauplattformtemperatur auf der Bauplattform-Höchsttemperatur gehalten werden. Auch wenn in der Folge ein Absinken der Oberflächentemperatur zu erwarten ist, aufgrund der konstanten Bauplattformtemperatur und des weiteren Ablegens von Schichten, kann die Oberflächentemperatur weiter ermittelt werden, um bei einem Überschreiten des Sollwerts und/oder eines kritischen Werts entsprechend eingreifen zu können bzw. entsprechende Maßnahmen ergreifen zu können. Gemäß dieser Ausführungsform ist es möglich, den Eintrag an Wärme in den Schichtenverbund insofern besonders hoch zu gestalten, da bis zum Erreichen der Bauplattform-Höchsttemperatur ein durch geeignete Sollwertwahl eingestellter hoher Wärmeeintrag gewährleistet ist, der jedoch eine Beschädigung von zum Beispiel dem Druckkopf vermeidet.

Zum Beispiel können bei dem Verfahren die Oberflächentemperatur von mindestens einem ersten Temperatursensor erfasst/überwacht werden (dies kann zum Beispiel für jede aufgebrachte Bauteil-Schicht oder zum Beispiel für jede zweite oder dritte aufgebrachte Bauteil-Schicht erfolgen, zum Beispiel jeweils ein oder mehrmals) und/oder die Temperatur der Bauplattform von mindestens einem zweiten Temperatursensor erfasst/überwacht werden. Der zweite Temperatursensor kann zum Beispiel einen PTC aufweisen oder von einem solchen gebildet sein. Der zweite Temperatursensor kann zum Beispiel an oder in der Bauplattform vorgesehen sein, zum Beispiel an der Bauplattformunterseite. Der erste Temperatursensor kann zum Beispiel einen Infrarotsensor aufweisen oder von einem solchen gebildet sein. Der erste Temperatursensor kann zum Beispiel über dem Baufeld vorgesehen und diesem zugewandt sein.

Zum Beispiel können bei dem Verfahren ein von dem ersten Temperatursensor erfasster erster Temperaturwert mit der Sollwertvorgabe verglichen werden und/oder ein von dem zweiten Temperatursensor erfasster zweiter Temperaturwert mit der vorgegebenen Bauplattform-Höchsttemperatur verglichen werden. Zum Beispiel kann basierend auf dem Ergebnis des Vergleichs ein Einstellen/Verstellen der Heizleistung der Heizvorrichtung erfolgen.

Zum Beispiel können bei dem Verfahren die Bauplattform fluidundurchlässig ausgebildet sein und/oder das Erwärmen der aufgebrachten Schichten aus losem Partikelmaterial in Abwesenheit eines (Wärme-)Fluidstroms erfolgen und/oder das Erwärmen der aufgebrachten Schichten aus losem Partikelmaterial in Abwesenheit einer über der jeweils zuletzt aufgebrachten Schicht vorgesehenen Heizvorrichtung erfolgen.

Zum Beispiel kann bei dem Verfahren die Heizvorrichtung an, zum Beispiel auf, und/oder in der Bauplattform angeordnet sein. Die Heizvorrichtung kann zum Beispiel eingerichtet sein, um die Bauplattform flächendeckend, d.h. im Wesentlichen die gesamte Oberfläche davon, zu erwärmen, insbesondere gleichmäßig.

Zum Beispiel können bei dem Verfahren das flüssige Behandlungsmittel ein organisches Bindemittel, zum Beispiel ein Phenol-basiertes Bindemittel, zum Beispiel ein Phenolharz, oder ein Furan-basiertes Bindemittel, zum Beispiel ein Furanharz, oder ein anorganisches Bindemittel, zum Beispiel ein Wasserglas-basiertes Bindemittel, zum Beispiel ein Wasserglas, aufweisen, und/oder das Partikelmaterial Sandpartikel und/oder Salzpartikel und/oder Metallpartikel aufweisen, und/oder das Bauteil ein Gießkern und/oder eine Gießform sein.

Zum Beispiel kann bei dem Verfahren die Bauplattform nach Fertigstellung des mindestens einen Bauteils für eine vorgegebene Zeitdauer auf der vorgegebenen Bauplattform-Höchsttemperatur gehalten werden, zum Beispiel vor dem Entpacken des Bauteils, also während das gefertigte Bauteil, das aus den verfestigten/behandelten Teilbereichen gebildet ist, von dem losem, nicht-verfestigtem Partikelmaterial umgeben ist.

Gemäß einem weiteren Aspekt der Erfindung weist ein 3D-Drucker auf:
eine Bauplattform, die mit einer Heizvorrichtung versehen ist,
einen Beschichter zum Aufbringen einer Schicht aus losem Partikelmaterial auf die Bauplattform,
einen Druckkopf zum Ausgeben eines flüssigen Behandlungsmittels auf einen Teilbereich einer zuletzt aufgebrachten Schicht aus losem Partikelmaterial, und
eine Steuervorrichtung, die dazu eingerichtet ist, um das oben beschriebene Verfahren auszuführen. D.h., die Steuervorrichtung kann zum Beispiel eingerichtet sein, um die Bauplattform, inkl. Heizvorrichtung, den Beschichter und den Druckkopf entsprechend anzusteuern, so dass diese das oben beschriebene Verfahren ausführen.

Der 3D-Drucker kann zum Beispiel ferner aufweisen:
einen ersten Temperatursensor zum Erfassen einer Oberflächentemperatur der zuletzt aufgebrachten Schicht und/oder
einen zweiten Temperatursensor zum Erfassen einer Temperatur der Bauplattform. Der erste und der zweite Temperatursensor können zum Beispiel mit der Steuervorrichtung in Verbindung stehen.

Bei dem 3D-Drucker können zum Beispiel die Bauplattform fluidundurchlässig ausgebildet sein und/oder die Heizvorrichtung an, zum Beispiel auf, und/oder in der Bauplattform angeordnet sein.

Beispielgebende, aber nicht einschränkende Ausführungsformen der Erfindung werden im Folgenden näher erläutert.
Figur 1 zeigt ein (schematisches) Diagramm eines Temperaturverlaufs der Bauplattformtemperatur gemäß einer ersten Ausführungsform, wie er in einem erfindungsgemäßen Verfahren auftreten kann.
Figur 2 zeigt ein (schematisches) Diagramm eines Temperaturverlaufs der Bauplattformtemperatur gemäß einer zweiten Ausführungsform, wie er in einem erfindungsgemäßen Verfahren auftreten kann.
Figur 3 zeigt ein (schematisches) Diagramm eines Temperaturverlaufs der Bauplattformtemperatur gemäß einer dritten Ausführungsform, wie er in einem erfindungsgemäßen Verfahren auftreten kann.
Figur 4 zeigt ein (schematisches) Diagramm eines Temperaturverlaufs der Oberflächentemperatur der jeweils zuletzt aufgebrachten Schicht gemäß einer vierten Ausführungsform, wie er in einem erfindungsgemäßen Verfahren auftreten kann.
Figur 5 zeigt ein Ablaufdiagramm einer Steuersequenz gemäß einer fünften Ausführungsform.
Figur 6 zeigt einen 3D-Drucker gemäß einer sechsten Ausführungsform.

In der folgenden Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann.

Die folgende Beschreibung ist deshalb nicht in einschränkendem Sinne aufzufassen, und der Schutzumfang der vorliegenden Erfindung wird durch die angefügten Ansprüche definiert.

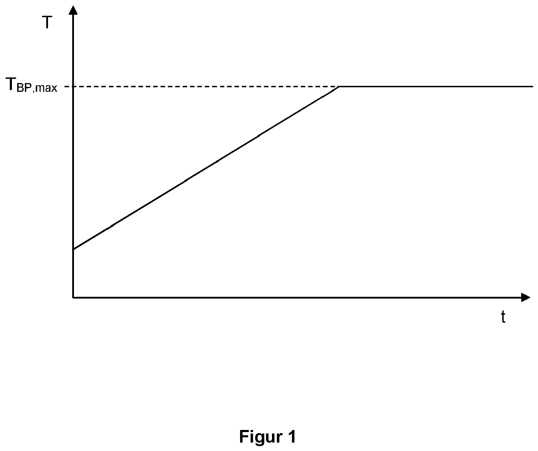

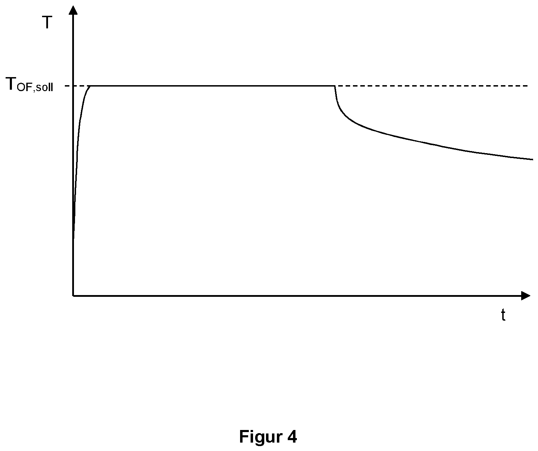

In den Figuren 1 bis 3 ist auf der horizontalen Achse die Zeit t und auf der vertikalen Achse die Temperatur T der Bauplattform aufgetragen. In der Figur 4 ist auf der horizontalen Achse die Zeit t und auf der vertikalen Achse die Temperatur T der Oberfläche der jeweils zuletzt aufgebrachten Schicht aufgetragen.

Ein Verfahren zum Herstellen mindestens eines Bauteils im 3D-Druck auf einer Bauplattform, die mit einer Heizvorrichtung versehen ist, weist die folgenden Schritte auf: (1) Aufbringen einer Schicht aus losem Partikelmaterial auf die Bauplattform (2) Erwärmen der aufgebrachten Schicht aus losem Partikelmaterial mittels der Heizvorrichtung der Bauplattform, (3) Ausgeben eines flüssigen Behandlungsmittels auf einen Teilbereich der erwärmten Schicht aus losem Partikelmaterial (gemäß einem Schnitt des zu fertigenden Bauteils), (4) Wiederholen der Schritte (1) bis (3), um das mindestens eine Bauteil aufzubauen. Das Erwärmen mit der Heizvorrichtung der Bauplattform kann derart durchgeführt werden, dass eine Temperatur der Bauplattform T_{BP} während des Aufbauens des Bauteils in Richtung einer vorgegebenen Bauplattform-Höchsttemperatur T_{BP,max} ansteigt, wodurch eine Oberflächentemperatur der jeweils zuletzt aufgebrachten Schicht T_{OF} eingestellt wird, zum Beispiel auf einen bestimmten Wert bzw. auf einen bestimmten Temperaturbereich (d.h., die Oberflächentemperatur wird dadurch in einem bestimmten Temperaturbereich gehalten).

Wie in Figur 1 gezeigt, kann die Temperatur der Bauplattform T_{BP} zum Beispiel linear (zum Beispiel mit einer konstanten Temperaturänderungsrate) ansteigen.

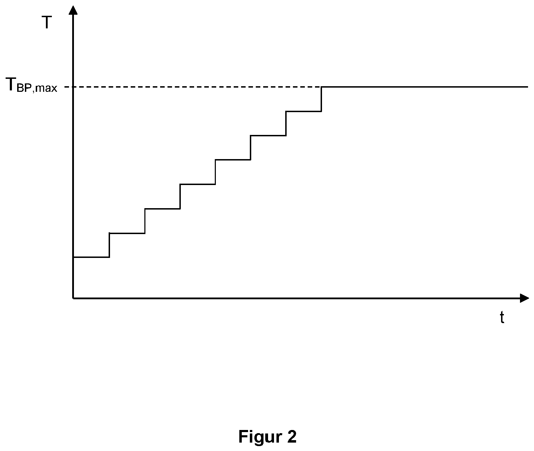

Wie in Figur 2 gezeigt, kann die Temperatur der Bauplattform T_{BP} zum Beispiel stufenförmig bzw. stufenweise ansteigen. Die Temperatur der Bauplattform T_{BP} kann zum Beispiel zunächst für eine erste Zeitdauer auf einer ersten Temperatur gehalten werden und anschließend für eine zweite Zeitdauer auf einer zweiten, erhöhten Temperatur gehalten werden, usw.

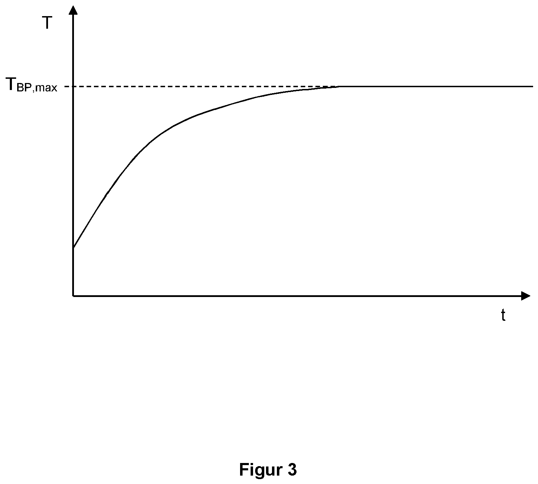

Wie in Figur 3 gezeigt, kann die Temperatur der Bauplattform T_{BP} zum Beispiel kurvenförmig ansteigen. Die Temperaturverlaufskurve kann zum Beispiel einen Temperaturverlauf aufweisen, bei dem die Temperaturänderungsrate geringer wird, wenn sich die Bauplattformtemperatur T_{BP} der Bauplattform-Höchsttemperatur T_{BP,max} annähert.

Es versteht sich, dass zu den in den Figuren 1 bis 3 gezeigten Temperaturverläufen der Bauplattformtemperatur alternative Verläufe möglich sind. Zum Beispiel kann die Bauplattformtemperatur für eine erste Zeitdauer mit einer ersten Temperaturänderungsrate linear ansteigen und anschließend für eine zweite Zeitdauer mit einer zweiten Temperaturänderungsrate linear ansteigen. Zum Beispiel kann der Temperaturverlauf eine Temperaturverlaufskurve haben, bei dem die Temperaturänderungsrate größer wird, wenn sich die Bauplattformtemperatur T_{BP} der Bauplattform-Höchsttemperatur T_{BP,max} annähert.

Der Temperaturverlauf der Bauplattformtemperatur kann zum Beispiel vor der Durchführung des 3D-Druck-Verfahrens (zum Beispiel experimentell) ermittelt und so eingestellt werden (unter Verwendung der Heizvorrichtung), dass eine Oberflächentemperatur der jeweils zuletzt aufgebrachten Schicht T_{OF} auf einen vorgegebenen (zum Beispiel im Wesentlichen konstanten) Temperaturwert oder einen entsprechenden Bereich eingestellt wird. Der vorgegebene Temperaturwert oder - bereich kann zum Beispiel abhängig von dem flüssigen Behandlungsmittel gewählt sein. Der vorgegebene Temperaturwert kann zum Beispiel so gewählt sein, dass ein Druckkopf des 3D-Druckers, aus dem das flüssige Behandlungsmittel ausgegeben wird, nicht beschädigt oder beeinträchtigt wird (zum Beispiel durch ein Verkleben der Druckmodulöffnungen durch Verdampfen eines Lösemittelanteils).

Wie in den Figuren 1 bis 3 gezeigt, kann die Temperatur der Bauplattform T_{BP} zum Beispiel bis zum Erreichen der vorgegebenen Bauplattform-Höchsttemperatur T_{BP,max} erwärmt werden.

Wie in den Figuren 1 bis 3 gezeigt, kann die Temperatur der Bauplattform T_{BP} zum Beispiel nach dem Erreichen der vorgegebenen Bauplattform-Höchsttemperatur T_{BP,max} auf der vorgegebenen Bauplattform-Höchsttemperatur T_{BP,max} gehalten werden.

Die vorgegebene Bauplattform-Höchsttemperatur kann zum Beispiel in einem Bereich von 100-320°C, zum Beispiel 125-250°C, zum Beispiel 150-200°C, liegen. Die vorgegebene Bauplattform-Höchsttemperatur kann zum Beispiel in Abhängigkeit von dem Behandlungsmittel und/oder dem Partikelmaterial gewählt sein.

Die Oberflächentemperatur der jeweils zuletzt aufgebrachten Schicht T_{OF} kann zum Beispiel auf eine Temperatur in einem Bereich von 30-70°C, zum Beispiel 30-60°C, zum Beispiel 30-50°C, zum Beispiel 30-40°C, zum Beispiel 35°C, eingestellt werden/sein, zumindest solange die vorgegebene Bauplattform-Höchsttemperatur T_{BP,max} nicht erreicht ist. Die Oberflächentemperatur der jeweils zuletzt aufgebrachten Schicht T_{OF} kann dabei zum Beispiel auf eine (im Wesentlichen) konstante Temperatur eingestellt werden, sie kann sich aber auch in einem der genannten oder beanspruchten Bereiche bewegen / schwanken. Die Oberflächentemperatur der jeweils zuletzt aufgebrachten Schicht T_{OF} kann zum Beispiel in Abhängigkeit von dem Behandlungsmittel eingestellt werden.

Das Einstellen der Oberflächentemperatur der jeweils zuletzt aufgebrachten Schicht T_{OF} über den Temperaturverlauf der Heizvorrichtung kann zum Beispiel mittels einer Steuerung erfolgen, indem die Heizvorrichtung entsprechend einem vorab ermittelten Temperaturverlauf betrieben wird.

Alternativ kann das Einstellen der Oberflächentemperatur zum Beispiel mittels einer Temperaturregelung unter Anwendung einer Sollwertvorgabe für die Oberflächentemperatur erfolgen, zum Beispiel bis die vorgegebene Bauplattform-Höchsttemperatur T_{BP,max} erreicht ist. Dann ergibt sich der Temperaturverlauf der Bauplattformtemperatur aus der Regelung der Oberflächentemperatur.

Wie in Figur 4 gezeigt, kann die Oberflächentemperatur der jeweils zuletzt aufgebrachten Schicht T_{OF} auf einen Sollwert für die Oberflächentemperatur T_{OF,soll} eingestellt werden. Dies kann zum Beispiel mittels der Temperaturregelung erfolgen. Alternativ kann zum Beispiel der Temperaturverlauf der Bauplattformtemperatur so eingestellt/gesteuert werden, dass die Oberflächentemperatur der jeweils zuletzt aufgebrachten Schicht T_{OF} dem Sollwert für die Oberflächentemperatur T_{OF,soll} (im Wesentlichen) entspricht.

Wie in Figur 4 gezeigt, kann die Oberflächentemperatur der jeweils zuletzt aufgebrachten Schicht T_{OF} bis auf den Sollwert für die Oberflächentemperatur T_{OF,soll} ansteigen und dann bei diesem Sollwert gehalten werden. Wenn eine gewisse Dicke bzw. Höhe der aufgebrachten Schichten erreicht ist und/oder die vorgegebene Bauplattform-Höchsttemperatur T_{BP,max} erreicht ist, kann es (bei fortgesetztem Schichtauftrag) zu einer Verringerung der Oberflächentemperatur der jeweils zuletzt aufgebrachten Schicht T_{OF} kommen, da die von der Bauplattform abgegebene Wärmemenge dann zu gering sein kann, um die Oberflächentemperatur der jeweils zuletzt aufgebrachten Schicht T_{OF} auf dem Sollwert zu halten.

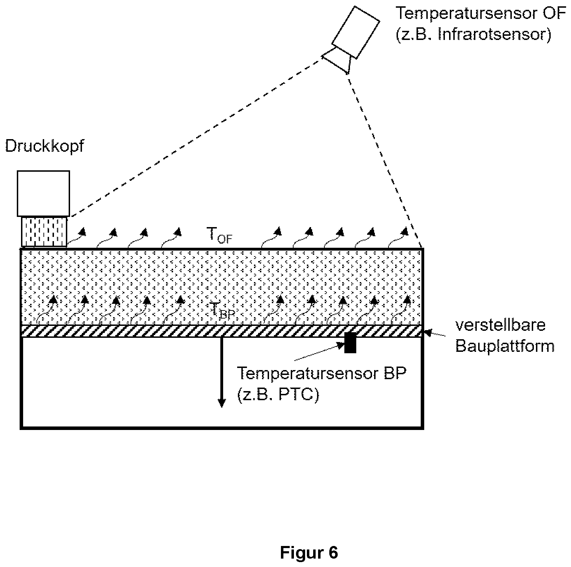

Die Oberflächentemperatur der jeweils zuletzt aufgebrachten Schicht T_{OF} kann zum Beispiel von mindestens einem ersten Temperatursensor erfasst werden. Die Temperatur der Bauplattform T_{BP} kann zum Beispiel von mindestens einem zweiten Temperatursensor erfasst werden. Siehe zum Beispiel Figur 6.

Der erste Temperatursensor kann zum Beispiel ein Infrarotsensor sein. Der erste Temperatursensor kann zum Beispiel im Wesentlichen die Oberflächentemperatur des gesamten Baufelds erfassen bzw. einen Mittelwert oder Maximalwert davon. Der erste Temperatursensor kann zum Beispiel die Oberflächentemperatur eines bestimmten Abschnitts des Baufelds erfassen, wobei der Abschnitt zum Beispiel eine Fläche von 20% oder weniger (zum Beispiel 10% oder weniger, zum Beispiel 5% oder weniger) der gesamten Fläche des Baufelds umfasst. Es können zum Beispiel auch mehrere erste Temperatursensoren vorgesehen sein, die jeweils eine Temperatur eines vorgegebenen Teilbereichs der Baufeldoberfläche erfassen, wobei zum Beispiel ein Mittelwert oder Maximalwert der erfassten Temperaturwerte als Oberflächentemperatur verwendet werden kann.

Der zweite Temperatursensor kann zum Beispiel mindestens einen PTC-Widerstand aufweisen. Es können zum Beispiel mehrere zweite Temperatursensoren vorgesehen sein, die jeweils eine Temperatur einer vorgegebenen Position der Bauplattform erfassen, wobei zum Beispiel ein Mittelwert oder Maximalwert der erfassten Temperaturwerte als Bauplattformtemperatur verwendet werden kann.

Ein von dem ersten Temperatursensor erfasster erster Temperaturwert T_{OF} kann zum Beispiel mit der Sollwertvorgabe T_{OF,soll} verglichen werden (im Falle einer Regelung). Ein von dem zweiten Temperatursensor erfasster zweiter Temperaturwert T_{BP} kann zum Beispiel mit der vorgegebenen Bauplattform-Höchsttemperatur T_{BP,max} verglichen werden.

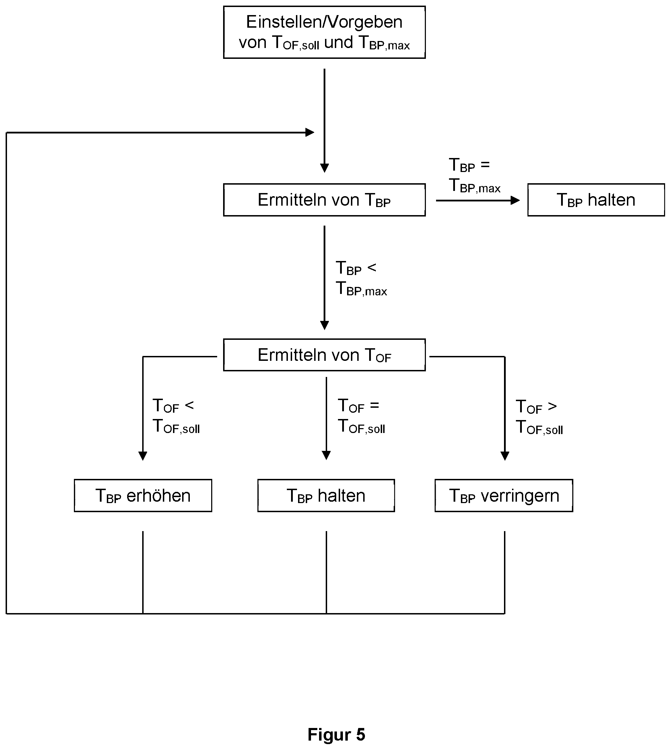

Wie in Figur 5 gezeigt, können im Rahmen einer Regelung zum Beispiel zunächst der Sollwert für die Oberflächentemperatur T_{OF,soll} und die Bauplattform-Höchsttemperatur T_{BP,max} eingestellt bzw. vorgegeben werden, zum Beispiel in Abhängigkeit von dem verwendeten Bindemittelsystem und/oder Partikelmaterial. Die Temperatur der Bauplattform T_{BP} kann dann in dem Verfahren zum Beispiel mit dem zweiten Temperatursensor ermittelt werden. Die ermittelte Bauplattformtemperatur T_{BP} kann dann mit der Bauplattform-Höchsttemperatur T_{BP,max} verglichen werden. Wenn die ermittelte Bauplattformtemperatur T_{BP} gleich der Bauplattform-Höchsttemperatur T_{BP,max} ist (oder größer), kann die Bauplattformtemperatur T_{BP} im weiteren Verlauf des Verfahren zum Beispiel auf der Bauplattform-Höchsttemperatur T_{BP,max} gehalten werden. Wenn die ermittelte Bauplattformtemperatur T_{BP} größer als die Bauplattform-Höchsttemperatur T_{BP,max} ist, kann die Bauplattformtemperatur T_{BP} zum Beispiel auf die Bauplattform-Höchsttemperatur T_{BP,max} verringert werden und dann bei der Bauplattform-Höchsttemperatur T_{BP,max} gehalten werden. Wenn die ermittelte Bauplattformtemperatur T_{BP} kleiner als die Bauplattform-Höchsttemperatur T_{BP,max} ist, kann die Oberflächentemperatur der jeweils zuletzt aufgebrachten Schicht T_{OF} zum Beispiel mit dem ersten Temperatursensor ermittelt werden. Die ermittelte Oberflächentemperatur T_{OF} kann dann mit dem Sollwert für die Oberflächentemperatur T_{OF,soll} verglichen werden. Wenn die ermittelte Oberflächentemperatur T_{OF} kleiner als der Sollwert für die Oberflächentemperatur T_{OF,soll} ist, kann zum Beispiel die Bauplattformtemperatur T_{BP} erhöht werden. Wenn die ermittelte Oberflächentemperatur T_{OF} gleich dem Sollwert für die Oberflächentemperatur T_{OF,soll} ist, kann zum Beispiel die Bauplattformtemperatur T_{BP} gehalten werden. Wenn die ermittelte Oberflächentemperatur T_{OF} größer als der Sollwert für die Oberflächentemperatur T_{OF,soll} ist, kann zum Beispiel die Bauplattformtemperatur T_{BP} verringert werden.

Die Bauplattform kann zum Beispiel fluidundurchlässig ausgebildet sein. Das Erwärmen der aufgebrachten Schichten aus losem Partikelmaterial kann zum Beispiel in Abwesenheit eines Fluidstroms erfolgen. Das Erwärmen der aufgebrachten Schichten aus losem Partikelmaterial kann zum Beispiel in Abwesenheit einer über der jeweils zuletzt aufgebrachten Schicht vorgesehenen Heizvorrichtung erfolgen.

Die Heizvorrichtung (der Bauplattform) kann zum Beispiel eine elektrische Heizvorrichtung sein und an und/oder in der Bauplattform angeordnet sein.

Das flüssige Behandlungsmittel kann zum Beispiel ein organisches Bindemittel sein, zum Beispiel ein Phenol-basiertes Bindemittel (zum Beispiel ein Phenolharz) oder ein Furan-basiertes Bindemittel (zum Beispiel ein Furanharz). Das flüssige Behandlungsmittel kann zum Beispiel ein anorganisches Bindemittel sein, zum Beispiel ein Wasserglas-basiertes Bindemittel (zum Beispiel ein Wasserglas).

Die Bauplattformtemperatur kann zum Beispiel nach Fertigstellung des mindestens einen Bauteils für eine vorgegebene Zeitdauer auf der vorgegebenen Bauplattform-Höchsttemperatur gehalten werden, bevor das Bauteil entpackt wird. Nach dem Entpacken kann das Bauteil bei Bedarf weiter ausgehärtet werden.

Ein 3D-Drucker weist eine (zum Beispiel höhenverstellbare) Bauplattform, die mit einer Heizvorrichtung versehen ist, einen Beschichter zum Aufbringen einer Schicht aus losem Partikelmaterial auf die Bauplattform, einen Druckkopf zum Ausgeben eines flüssigen Behandlungsmittels auf einen Teilbereich einer zuletzt aufgebrachten Schicht aus losem Partikelmaterial, und eine Steuervorrichtung, die dazu eingerichtet ist, um das oben beschriebene Verfahren auszuführen, auf.

Wie in Figur 6 gezeigt, kann der 3D-Drucker zum Beispiel mindestens einen ersten Temperatursensor zum Erfassen einer Oberflächentemperatur der zuletzt aufgebrachten Schicht aus losem Partikelmaterial T_{OF} und/oder mindestens einen zweiten Temperatursensor zum Erfassen einer Temperatur der Bauplattform T_{BP} aufweisen. Der erste und/oder zweite Temperatursensor können zum Beispiel wie oben beschrieben ausgebildet sein.

Die Bauplattform kann zum Beispiel fluidundurchlässig ausgebildet sein. Die Heizvorrichtung kann zum Beispiel an und/oder in der Bauplattform angeordnet sein.

## Patentansprüche

1. Verfahren zum Herstellen mindestens eines Bauteils im 3D-Druck auf einer Bauplattform, die mit einer Heizvorrichtung versehen ist, aufweisend die Schritte:
Aufbringen einer Schicht aus losem Partikelmaterial auf die Bauplattform,
Erwärmen der aufgebrachten Schicht aus losem Partikelmaterial mittels der Heizvorrichtung der Bauplattform,
Ausgeben eines flüssigen Behandlungsmittels auf einen Teilbereich der erwärmten Schicht aus losem Partikelmaterial,
Wiederholen der obigen Schritte, um das mindestens eine Bauteil aufzubauen,
**dadurch gekennzeichnet, dass**
das Erwärmen mittels der Heizvorrichtung der Bauplattform derart durchgeführt wird, dass
eine Temperatur der Bauplattform während des Aufbauens des Bauteils in Richtung einer vorgegebenen Bauplattform-Höchsttemperatur ansteigt, um eine Oberflächentemperatur der jeweils zuletzt aufgebrachten Schicht einzustellen.

2. Verfahren nach Anspruch 1, wobei das Erwärmen mittels der Heizvorrichtung der Bauplattform derart durchgeführt wird, dass
die Bauplattform während des Aufbauens des Bauteils bis zu dem Erreichen der vorgegebenen Bauplattform-Höchsttemperatur erwärmt wird.

3. Verfahren nach Anspruch 2, wobei das Erwärmen mittels der Heizvorrichtung der Bauplattform derart durchgeführt wird, dass
die Temperatur der Bauplattform während des Aufbauens des Bauteils nach dem Erreichen der vorgegebenen Bauplattform-Höchsttemperatur auf der vorgegebenen Bauplattform-Höchsttemperatur gehalten wird.

4. Verfahren nach einem der vorangehenden Ansprüche, wobei
die vorgegebene Bauplattform-Höchsttemperatur in einem Bereich von 180-320°C, zum Beispiel 200-300°C, zum Beispiel 220-280°C, zum Beispiel 240-260°C, liegt und/oder in Abhängigkeit von dem Behandlungsmittel und/oder dem Partikelmaterial gewählt ist.

5. Verfahren nach einem der vorangehenden Ansprüche, wobei
die Oberflächentemperatur der jeweils zuletzt aufgebrachten Schicht auf eine Temperatur in einem Bereich von 30-70°C, zum Beispiel 35-65°C, zum Beispiel 40-60°C, zum Beispiel 45-55°C, eingestellt wird, solange die vorgegebene Bauplattform-Höchsttemperatur nicht erreicht ist, zum Beispiel eine konstante Temperatur und/oder eine in Abhängigkeit von dem Behandlungsmittel gewählte Temperatur.

6. Verfahren nach einem der vorangehenden Ansprüche, wobei
das Einstellen der Oberflächentemperatur der jeweils zuletzt aufgebrachten Schicht mittels einer Temperaturregelung unter Anwendung einer Sollwertvorgabe für die Oberflächentemperatur erfolgt, solange die vorgegebene Bauplattform-Höchsttemperatur nicht erreicht ist.

7. Verfahren nach einem der vorangehenden Ansprüche, wobei
die Oberflächentemperatur von mindestens einem ersten Temperatursensor erfasst wird und/oder
die Temperatur der Bauplattform von mindestens einem zweiten Temperatursensor erfasst wird.

8. Verfahren nach Anspruch 7, wobei
ein von dem ersten Temperatursensor erfasster erster Temperaturwert mit der Sollwertvorgabe aus Anspruch 6 verglichen wird, und/oder
ein von dem zweiten Temperatursensor erfasster zweiter Temperaturwert mit der vorgegebenen Bauplattform-Höchsttemperatur verglichen wird.

9. Verfahren nach einem der vorangehenden Ansprüche, wobei
die Bauplattform fluidundurchlässig ausgebildet ist und/oder
das Erwärmen der aufgebrachten Schichten aus losem Partikelmaterial in Abwesenheit eines Fluidstroms erfolgt und/oder
das Erwärmen der aufgebrachten Schichten aus losem Partikelmaterial in Abwesenheit einer über der jeweils zuletzt aufgebrachten Schicht vorgesehenen Heizvorrichtung erfolgt.

10. Verfahren nach einem der vorangehenden Ansprüche, wobei
die Heizvorrichtung an, zum Beispiel auf, und/oder in der Bauplattform angeordnet ist.

11. Verfahren nach einem der vorangehenden Ansprüche, wobei
das flüssige Behandlungsmittel ein organisches Bindemittel, zum Beispiel ein Phenol-basiertes Bindemittel, zum Beispiel ein Phenolharz, oder ein Furan-basiertes Bindemittel, zum Beispiel ein Furanharz, oder ein anorganisches Bindemittel, zum Beispiel ein Wasserglas-basiertes Bindemittel, zum Beispiel ein Wasserglas, aufweist, und/oder
das Partikelmaterial Sandpartikel und/oder Salzpartikel und/oder Metallpartikel aufweist, und/oder
das Bauteil ein Gießkern und/oder eine Gießform ist.

12. Verfahren nach einem der vorangehenden Ansprüche, wobei
die Bauplattform nach Fertigstellung des mindestens einen Bauteils für eine vorgegebene Zeitdauer auf der vorgegebenen Bauplattform-Höchsttemperatur gehalten wird.

13. 3D-Drucker, aufweisend
eine Bauplattform, die mit einer Heizvorrichtung versehen ist,
einen Beschichter zum Aufbringen einer Schicht aus losem Partikelmaterial auf die Bauplattform,
einen Druckkopf zum Ausgeben eines flüssigen Behandlungsmittels auf einen Teilbereich einer zuletzt aufgebrachten Schicht aus losem Partikelmaterial, und
eine Steuervorrichtung, **dadurch gekennzeichnet, dass** die Steuereinrichtung dazu eingerichtet ist, um das Verfahren nach einem der Ansprüche 1-12 auszuführen.

14. 3D-Drucker nach Anspruch 13, ferner aufweisend
einen ersten Temperatursensor zum Erfassen einer Oberflächentemperatur der zuletzt aufgebrachten Schicht und/oder
einen zweiten Temperatursensor zum Erfassen einer Temperatur der Bauplattform.

15. 3D-Drucker nach Anspruch 13 oder 14, wobei
die Bauplattform fluidundurchlässig ausgebildet ist und/oder
die Heizvorrichtung an, zum Beispiel auf, und/oder in der Bauplattform angeordnet ist.

## Claims

1. Method of manufacturing at least one component by 3D printing on a construction platform provided with a heating device, comprising the steps of:
applying a layer of loose particulate material to the construction platform,
heating the applied layer of loose particulate material by means of the heating device of the construction platform,
outputting a liquid treatment agent onto a partial area of the heated layer of loose particulate material,
repeating the above steps to build up the at least one component,
**characterized in that** the heating is carried out by means of the heating device of the construction platform in such a way that
a temperature of the construction platform increases toward a predetermined construction platform maximum temperature during the build-up of the component to set a surface temperature of the respectively last applied layer.

2. Method according to claim 1, wherein the heating is carried out by means of the heating device of the construction platform in such a way that
the construction platform is heated during the build-up of the component until the predetermined construction platform maximum temperature is reached.

3. Method according to claim 2, wherein the heating is carried out by means of the heating device of the construction platform in such a way that
the temperature of the construction platform is maintained at the predetermined construction platform maximum temperature during the build-up of the component after the predetermined construction platform maximum temperature is reached.

4. Method according to any one of the preceding claims, wherein
the predetermined construction platform maximum temperature is in a range of 180-320°C, for example 200-300°C, for example 220-280°C, for example 240-260°C, and/or is selected depending on the treatment agent and/or the particulate material.

5. Method according to any one of the preceding claims, wherein
the surface temperature of the respectively last applied layer is set to a temperature in a range of 30-70°C, for example 35-65°C, for example 40-60°C, for example 45-55°C, as long as the predetermined construction platform maximum temperature is not reached, for example a constant temperature and/or a temperature selected depending on the treatment agent.

6. Method according to any one of the preceding claims, wherein
the setting of the surface temperature of the respectively last applied layer is carried out by means of a temperature control using a set value specification for the surface temperature as long as the predetermined construction platform maximum temperature has not been reached.

7. Method according to any one of the preceding claims, wherein
the surface temperature is sensed by at least a first temperature sensor and/or
the temperature of the construction platform is sensed by at least a second temperature sensor.

8. Method according to claim 7, wherein
a first temperature value sensed by the first temperature sensor is compared to the set value specification of claim 6, and/or
a second temperature value sensed by the second temperature sensor is compared to the predetermined construction platform maximum temperature.

9. Method according to any one of the preceding claims, wherein
the construction platform is configured to be fluid-impermeable and/or
the heating of the applied layers of loose particulate material is carried out in the absence of a fluid flow and/or
the heating of the applied layers of loose particulate material is carried out in the absence of a heating device provided above the respectively last applied layer.

10. Method according to any one of the preceding claims, wherein
the heating device is arranged at, for example on, and/or in the construction platform.

11. Method according to any one of the preceding claims, wherein
the liquid treatment agent comprises an organic binding agent, for example a phenol-based binding agent, for example a phenolic resin, or a furan-based binding agent, for example a furan resin, or an inorganic binding agent, for example a waterglass-based binding agent, for example a waterglass, and/or
the particulate material comprises sand particles and/or salt particles and/or metal particles, and/or
the component is a casting core and/or a casting mold.

12. Method according to any one of the preceding claims, wherein
the construction platform is maintained at the predetermined construction platform maximum temperature for a predetermined period of time after completion of the at least one component.

13. 3D printer, comprising
a construction platform provided with a heating device,
a coater for applying a layer of loose particulate material to the construction platform,
a print head for outputting a liquid treatment agent onto a partial area of a last applied layer of loose particulate material, and
a control device, **characterized in that** the control device is configured to perform the method according to any one of claims 1-12.

14. 3D printer according to claim 13, further comprising
a first temperature sensor for sensing a surface temperature of the last applied layer and/or
a second temperature sensor for sensing a temperature of the construction platform.

15. 3D printer according to claim 13 or 14, wherein
the construction platform is configured to be fluid-impermeable and/or
the heating device is arranged at, for example on, and/or in the construction platform.

## Revendications

1. Procédé de fabrication d'au moins un composant par impression 3D sur une plate-forme de construction pourvue d'un dispositif de chauffage, comprenant les étapes consistant à :
Appliquer une couche de matériau particulaire en vrac sur la plate-forme de construction, Chauffer la couche de matériau particulaire en vrac appliquée au moyen du dispositif de
chauffage de la plate-forme de construction,
Distribuer un agent de traitement liquide sur une partie de la couche chauffée de matériau particulaire en vrac,
Répéter les étapes ci-dessus pour assembler le au moins un composant, **caractérisé en ce que**
le chauffage est effectué au moyen du dispositif de chauffage de la plate-forme de construction de telle sorte que
une température de la plate-forme de construction augmente pendant le montage du composant en direction d'une température maximale prédéfinie de la plate-forme de construction, afin d'ajuster une température de surface de la dernière couche respectivement appliquée.

2. Procédé selon la revendication 1, dans lequel le chauffage est effectué au moyen du dispositif de chauffage de la plate-forme de construction de telle sorte que
la plate-forme de construction est chauffée pendant le montage du composant jusqu'à ce que la température maximale prédéfinie de la plate-forme de construction soit atteinte.

3. Procédé selon la revendication 2, dans lequel le chauffage est effectué au moyen du dispositif de chauffage de la plate-forme de construction de telle sorte que
la température de la plate-forme de construction est maintenue à la température maximale prédéfinie de la plate-forme de construction pendant le montage du composant après que la température maximale prédéfinie de la plate-forme de construction a été atteinte.

4. Procédé selon l'une des revendications précédentes, dans lequel
la température maximale prédéfinie de la plate-forme de construction se situe dans une plage de 180 à 320 °C, par exemple 200 à 300 °C, par exemple 220 à 280 °C, par exemple 240 à 260 °C, et/ou est choisie en fonction de l'agent de traitement et/ou du matériau particulaire.

5. Procédé selon l'une des revendications précédentes, dans lequel
la température de surface de la couche respectivement appliquée en dernier est réglée à une température dans une plage de 30 à 70 °C, par exemple 35 à 65 °C, par exemple 40 à 60 °C, par exemple 45 à 55 °C, tant que la température maximale prédéfinie de la plate-forme de construction n'est pas atteinte, par exemple une température constante et/ou une température choisie en fonction de l'agent de traitement.

6. Procédé selon l'une des revendications précédentes, dans lequel
le réglage de la température de surface de la dernière couche appliquée s'effectue au moyen d'une régulation de température en utilisant une valeur de consigne pour la température de surface, tant que la température maximale prédéfinie de la plate-forme de construction n'est pas atteinte.

7. Procédé selon l'une des revendications précédentes, dans lequel
la température de surface est détectée par au moins un premier capteur de température et/ou
la température de la plate-forme de construction est détectée par au moins un deuxième capteur de température.

8. Procédé selon la revendication 7, dans lequel
une première valeur de température détectée par le premier capteur de température est comparée à la valeur de consigne de la revendication 6, et/ou
une deuxième valeur de température détectée par le deuxième capteur de température est comparée à la température maximale prédéfinie de la plate-forme de construction.

9. Procédé selon l'une des revendications précédentes, dans lequel
la plate-forme de construction est imperméable aux fluides et/ou
le chauffage des couches appliquées de matériau particulaire en vrac s'effectue en l'absence d'écoulement de fluide et/ou
le chauffage des couches appliquées de matériau particulaire en vrac s'effectue en l'absence d'un dispositif de chauffage prévu au-dessus de la couche respectivement appliquée en dernier.

10. Procédé selon l'une des revendications précédentes, dans lequel
le dispositif de chauffage est disposé sur, par exemple, et/ou dans la plate-forme de construction.

11. Procédé selon l'une des revendications précédentes, dans lequel
l'agent de traitement liquide comprend un liant organique, par exemple un liant à base de phénol, par exemple une résine phénolique, ou un liant à base de furane, par exemple une résine furanique, ou un liant inorganique, par exemple un liant à base de verre soluble, par exemple un verre soluble, et/ou
le matériau particulaire comprend des particules de sable et/ou des particules de sel et/ou des particules métalliques, et/ou
le composant est un noyau de coulée et/ou un moule de coulée.

12. Procédé selon l'une des revendications précédentes, dans lequel
la plate-forme de construction est maintenue à la température maximale prédéfinie de la plate-forme de construction pendant une durée prédéfinie après l'achèvement d'au moins un composant.

13. Imprimante 3D, comprenant
une plate-forme de construction équipée d'un dispositif de chauffage,
un applicateur pour appliquer une couche de matériau particulaire en vrac sur la plate-forme de construction,
une tête d'impression pour distribuer un agent de traitement liquide sur une partie d'une couche de matériau particulaire en vrac appliquée en dernier, et
un dispositif de commande, **caractérisé en ce que** le dispositif de commande est agencé pour effectuer la procédure selon une
des revendications 1 à 12.

14. Imprimante 3D selon la revendication 13, comprenant en outre
un premier capteur de température pour détecter une température de surface de la dernière couche appliquée et/ou
un deuxième capteur de température pour détecter une température de la plate-forme de construction.

15. Imprimante 3D selon la revendication 13 ou 14, dans lequel
la plate-forme de construction est imperméable aux fluides et/ou
le dispositif de chauffage est disposé sur, par exemple, et/ou dans la plate-forme de construction.
